# EUROPÄISCHE PATENTANMELDUNG

(11) **EP 1 437 568 A2**
(43) Veröffentlichungstag der Anmeldung: **14.07.2004**
(21) Anmeldenummer: 04000334.5
(22) Anmeldetag: 09.01.2004
(51) Int. Cl.: G01B 11/27, G01C 3/00, G01C 15/00

(54) **Lasermesseinrichtung und Messgerät zur Erfassung der Koordinaten eines Laserstrahls**

(30) Priorität: 09.01.2003 DE 10300402
(71) Anmelder: Wente, Holger, Dipl.-Ing., D-38108 Braunschweig (DE)
(72) Erfinder: Wente, Holger, Dipl.-Ing., D-38108 Braunschweig (DE)
(74) Vertreter: Gerstein, Hans Joachim, Dipl.-Ing.

(57) **Zusammenfassung**

Bei einer Lasermesseinrichtung (1 ) mit einem Laserentfernungsmessgerät (2), das eine Sendeoptik (4), eine Empfangsoptik (8) und eine Auswerteeinheit (µP) zur Ermittlung der Entfernung des Laserentfernungsmessgerätes (2) zu einer mindestens teilweise reflektierenden Zielfläche aus dem reflektierenden Anteil (7) eines durch die Sendeoptik (4) ausgestrahlten und durch die Empfangsoptik (8) aufgenommenen Laserstrahls (5) hat, ist die teilweise reflektierende Zielfläche eine Zielplatte (6) eines Laserkoordinatenmessgerätes (3), wobei das Laserkoordinatenmessgerät (3) mindestens einen optischen Bildaufnehmer zur Ermittlung der Lage eines Auftreffpunktes (A) des von dem Laserentfernungsmessgerät (2) ausgestrahlten Laserstrahls (5) auf der Zielplatte (6) hat. Es wird weiter vorgeschlagen, den Laserstrahl teilweise auf die Kanten der Zielplatte umzulenken und die Kanten-Austrittspunkte mit Lichtdetektoren zu bestimmen.

## Beschreibung

Die Erfindung betrifft eine Lasermesseinrichtung mit einem Laserentfernungsmessgerät, das eine Sendeoptik, eine Empfangsoptik und eine Auswerteeinheit zur Ermittlung der Entfernung des Laserentfernungsmessgerätes zu einer mindestens teilweise reflektierenden Zielfläche aus dem reflektierenden Anteil eines durch die Sendeoptik ausgestrahlten und durch die Empfangsoptik aufgenommenen Laserstrahls hat.

Die Erfindung betrifft weiterhin ein insbesondere für eine solche Lasermesseinrichtung verwendbares Laserkoordinatenmessgerät mit einer Zielplatte und mit optischen Bildaufnehmern zur Ermittlung der Lage des Auftreffpunktes eines Laserstrahls auf der Zielplatte.

Zur Vermessung von Objekten ist bekannt, eine Messachse mit einem Laserstrahl zu definieren und den Strahlenverlauf mit Hilfe einer Projektionsfläche und eines Bildaufnehmers zu bestimmen. Hierbei wird der Abstand zwischen dem Leuchtmittel und der Projektionsfläche variiert und die Koordinaten des Laserstrahlpunktes auf der Projektionsfläche mit Hilfe des Bildaufnehmers erfasst. Auf diese Weise können zum Beispiel Werkzeugmaschinen geometrisch vermessen und ausgerichtet werden.

So ist beispielsweise in der DE-OS 196 43 955 A1 eine Laserstrahl-Emitter-Einrichtung für ein Vermessungssystem beschrieben, die zum Aufspannen einer Ebene oder einer Kegelfläche durch den Laserstrahl drehbar gelagert ist.

In der DE-OS 38 14 466 A1 ist ein Verfahren und eine Vorrichtung zum Feststellen der relativen Lage einer Bezugsachse eines Objekts bezüglich eines Referenzlaserstrahls beschrieben, die zwei in der Projektionsrichtung des Referenzlaserstrahls hintereinander angeordnete Positionsdetektoren aufweist. Aus den Auftreffpunkten des Laserstrahls auf die Zielplatten der voneinander beabstandeten Positionsdetektoren kann die relative Lage eines Objekts bezüglich des Laserstrahls errechnet werden.

Weiterhin sind beispielsweise aus der DE-PS 198 29 659 C1 und DE-OS 44 36 447 A1 Laserentfernungsmesser bekannt, die aus dem reflektierten Anteil des Laserstrahls beispielsweise durch Impulslaufzeitmessung die Entfernung des Laserentfernungsmessers zu einer Reflektionsplatte bestimmt.

Aufgabe der Erfindung ist es, eine verbesserte Lasermesseinrichtung zu schaffen, die mit geringem Aufwand erweiterte Messmöglichkeiten bietet.

Die Aufgabe wird mit der gattungsgemäßen Lasermesseinrichtung erfindungsgemäß dadurch gelöst, dass die teilweise reflektierende Zielfläche für ein herkömmliches Laserentfernungsmessgerät eine Zielplatte eines Laserkoordinatenmessgerätes ist, wobei das Laserkoordinatenmessgerät mindestens einen optischen Bildaufnehmer zu Ermittlung der Lage eines Auftreffpunktes des von dem Laserentfernungsmessgerät ausgestrahlten Laserstrahls auf der Zielplatte hat.

Durch Kombination eines herkömmlichen Laserentfernungsgerätes mit einem eine Zielplatte aufweisenden Laserkoordinatenmessgerät ist es nunmehr möglich, sowohl die Entfernung, als auch die relative Lage der Zielplatte zu dem Laserstrahl zu ermitteln. Hierzu wird der von dem Laserentfernungsmessgerät erzeugte Laserstrahl genutzt. Die Zielplatte eines Laserkoordinatenmessgerätes ist vorzugsweise als Streulichtscheibe ausgeführt und möglichst lichtdurchlässig, um den Laserauftreffpunkt auf die Zielplatte, beispielsweise durch Bildaufnahme auf der Rückseite der Zielplatte, zu ermitteln. Hingegen sollte die Zielplatte des Laserentfernungsmessgerätes eine möglichst hohe Reflektion aufweisen. Es hat sich überraschend herausgestellt, dass trotz dieser unterschiedlichen Anforderungen an die Zielplatten eine Nutzung der Zielplatte der herkömmlichen Laserkoordinatenmessgeräte für Laserentfernungsmessgeräte möglich ist. Jedenfalls können die Reflektionseigenschaften der herkömmlichen Zielplatten in näheren Entfernungsbereichen bereits ausreichend sein.

Der optische Aufnehmer des Laserkoordinatenmessgerätes ist vorzugsweise eine auf die Rückseite der Zielplatte ausgerichtete Beobachtungskamera, wobei der Laserstrahl auf der Vorderseite der Zielplatte auftrifft. Bei einer solchen Ausführungsform hat sich eine Zielplatte aus Aluminiumoxid, auf die der Laserstrahl auftritt, als besonders geeignet für den Einsatz der Zielplatte sowohl für die Laserkoordinatenmessung als auch für die Entfernungsmessung herausgestellt. Aluminiumoxid hat ausgezeichnete Streueigenschaften aufgrund seiner homogenen, feinen Struktur, einen ausreichenden Reflektionsgrad für die Entfernungsmessung und ist zudem ausreichend durchlässig, so dass der Laserstrahlpunkt auf der Rückseite der Zielplatte erkennbar ist.

In einer anderen vorteilhaften Ausführungsform sind an den Seitenflächen, d. h. den Außenkanten der Zielplatte Lichtdetektoren zur Erfassung der Lage des von dem Auftreffpunkt auf der Zielplatte an die Seitenflächen der Zielplatte umgelenkten Laserlichtanteile vorgesehen. Solche Lichtdetektoren können beispielsweise eine Reihe von entlang der jeweiligen Seitenflächen der Zielplatte nebeneinander angeordnete Charged-Coupled-Device-Aufnehmer, CMOS-Aufnehmer oder Ähnliches sein.

In einer Ausführungsform werden die Seitenflächen, d. h. die Kanten der Zielplatte durch z. B. ätzen oder aufrauhen als Streuscheiben ausgebildet. Die umgelenkten Anteile des Laserstrahles lassen sich auf diese Weise mit dem Auge erkennen oder z. B. mittels Mikrolinsen auf den Lichtdetektoren abbilden.

Vorzugsweise ist die Zielplatte mehrschichtig. Dabei koppelt mindestens eine Schichtfläche der Zielplatte Anteile des Laserstrahles in eine vom Hauptstrahl abweichende Richtung aus, während die Hauptanteile die Strahlrichtung beibehalten und auf der Zielplattenrückseite austreten. Die anders gerichteten Strahlanteile treten ebenso wie der Hauptstrahl in eine weitere Schichtfläche ein, werden wegen ihres Strahlwinkels im Gegensatz zum Hauptstrahl jedoch daran gehindert die Schichtfläche zu verlassen und reflektieren an den Grenzschichten der Schichtfläche, bis sie wie in einem Lichtleiter den Rand erreichen. Die Strahlanteile treten an den 4 Rändern einer rechteckigen Zielplatte dort mit maximaler Intensität aus, wo der Abstand zwischen Hauptstrahl und Kante am geringsten ist. Die Lage des Hauptstrahles auf der Zielplattenfläche ist durch die Lage der Intensitätsmaxima an mindestens zwei Kanten hinreichend beschrieben. Werden die Kanten der lichtleitenden Schicht bei Plexiglas beispielsweise aufgerauht oder bei Glas angeätzt, entsteht an der Austrittsfläche ein sichtbares Bild der Intensitätsverteilung. Bei einer rechteckigen Zielplatte spannen zwei benachbarte Kanten ein kartesisches Koordinatensystem auf, bei dem die eine Kante der x- und die andere Kante der y-Achse entspricht.

Bei der mehrschichtigen Platte ist es zudem möglich, die Einfallswinkel zu messen, indem die Koordinaten der Auftreffpunkte des Laserstrahls auf mindestens zwei voneinander beabstandete Schichten bestimmt werden. Der Einfallswinkel ergibt sich dabei in Abhängigkeit von dem Abstand der entsprechenden Schichten und der Lageverschiebung der Auftreffpunkte. Vorzugsweise wird der Auftreffpunkt an einer vorderen Schicht an den Seitenflächen der Zielplatte bestimmt. Der dahinter liegende Auftreffpunkt kann beispielsweise durch Betrachtung der Rückseite der Zielplatte mittels abbildender Optik ermittelt werden. Besonders vorteilhaft ist, wenn eine Mattscheibe auf dem Bildaufnehmer selbst vorgesehen ist, auf der der Laserstrahl durch Streuung sichtbar gemacht und mit den unmittelbar dahinter liegenden Sensoren erkannt wird.

Durch Verkitten lassen sich darüber hinaus verschiedenste Materialien mit unterschiedlichen optischen Eigenschaften auf herkömmliche Weise mit einander kombinieren. Gezielt und mit geringsten Schichtdicken lassen sich derartige Schichtaufbauten z. B. durch Bedampfen realisieren. Hier sei auf die Verfahren der mikrofunktionalen und monolithischen Optik verwiesen.

Es ist vorteilhaft, wenn die Kanten der Zielplatte, an denen die Lichtdetektoren angeordnet sind, angeschliffen sind. Hierdurch wird ein verbesserter Lichtaustritt des an die Kanten umgelenkten Laserstrahls bewirkt.

In bekannter Weise kann ein Interferenzfilter vorgesehen sein um störendes Hintergrundlicht auszublenden. Besonders vorteilhaft ist es, den Interferenzfilter z. B. durch Beschichten unmittelbar angrenzend vor die Zielplatte zu platzieren. Insbesondere für die Ausführungsform mit an den Seitenflächen der Zielplatte angeordneten Lichtdetektoren ist es vorteilhaft, wenn der Interferenzfilter auf die Seitenkanten aufgetragen und unmittelbar darauf die Lichtdetektoren mit einer auf den Lichtdetektoren ausgebildeter dünner Mattscheibe platziert werden.

Die Zielplatte kann beispielsweise mindestens eine Glas- und/oder Plexiglasschicht haben. Insbesondere Plexiglas hat sich als geeignet herausgestellt, um Licht von dem Auftreffpunkt des Laserstrahls an die Kanten umzulenken.

Zum Feststellen der relativen Lage einer Bezugsachse eines Objekts bezüglich eines Referenz-Laserstrahls ist es vorteilhaft, zwei im Abstand voneinander angeordnete Laserkoordinatenmessgeräte vorzusehen. Eine solche Anordnung ist grundsätzlich bereits aus der DE-OS 38 14 466 A1 bekannt. Vorzugsweise ist die Zielplatte mit der teilweise reflektierenden Zielfläche des dem Laserentfernungsmessgerät zugewandten Laserkoordinatenmessgeräts für Licht mindestens teilweise durchlässig. Durch den Einsatz einer Zielplatte mit an den Kanten der Zielplatte angeordneten Lichtdetektoren wird ein sehr preisgünstiger und einfacher Messaufbau gewährleistet und es kann auf aufwendige Umlenkspiegel verzichtet werden.

Die Aufgabe wird weiterhin durch das gattungsgemäße Laserkoordinatenmessgerät dadurch gelöst, dass der Bildaufnehmer als auf Kanten der Zielplatte ausgerichtete Lichtdetektoren zur Erfassung der Kanten-Austrittspunkte des von dem Auftreffpunkt an die Kanten umgelenkten Laserstrahls ausgebildet ist.

Die Erfindung wird nachfolgend anhand der beigefügten Zeichnungen näher erläutert. Es zeigen:
- Fig. 1 -: Skizze einer erfindungsgemäßen Lasermesseinrichtung mit Laserentfernungsmessgerät und Laserkoordinatenmessgerät;
- Fig. 2 -: Skizze einer zweiten Ausführungsform eines Laserkoordinatenmessgerätes mit Lichtdetektoren an den Kanten der Zielplatte.

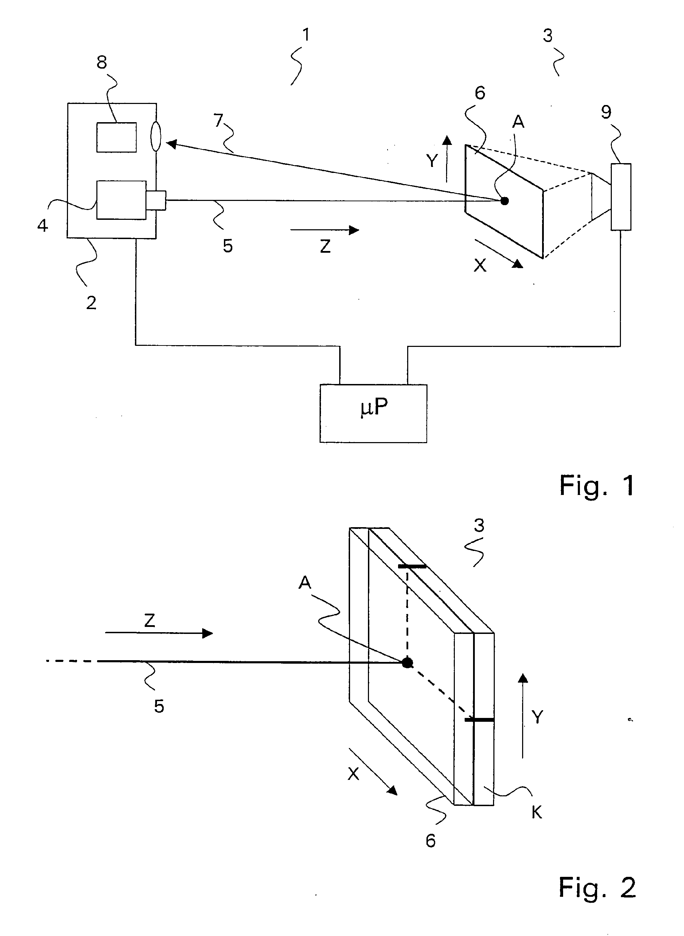

Die Figur 1 lässt eine Skizze einer erfindungsgemäßen Lasermesseinrichtung 1 mit einem Laserentfernungsmessgerät 2 und einem Laserkoordinatenmessgerät 3 erkennen. Das Laserentfernungsmessgerät 2 hat eine Sendeoptik 4 mit einem Laser zur Erzeugung eines Laserstrahls 5, der auf eine Zielplatte 6 des Laserkoordinatenmessgeräts gerichtet ist. Die Zielplatte 6 ist teilweise reflektierend. Der reflektierte Anteil 7 des Laserstrahls 5 wird über eine Empfangsoptik 8 des Laserentfernungsmessgerätes aufgenommen. Mit Hilfe hinreichend bekannter Messverfahren, wie beispielsweise Pulsmessverfahren, Phasenmessverfahren oder Laufzeitmessung, wird aus dem reflektierten Anteil 7 des Laserstrahls 5 und einem Referenzsignal die Entfernung des Laserentfernungsmessgerätes 2 zur Zielplatte 6 bestimmt.

Erfindungsgemäß ist die teilweise reflektierende Zielfläche gleichzeitig die Zielplatte 6 des Laserkoordinatenmessgerätes 3. Das Laserkoordinatenmessgerät 3 kann in einer ersten Ausführungsform einer auf die Rückseite der Zielplatte 6 ausgerichtete Beobachtungskamera 9 haben. Der Laserstrahl 5 trifft auf der Vorderseite der Zielplatte 6 auf und scheint zur Rückseite der Zielplatte 6 durch. Der helle Auftreffpunkt A kann dann über bekannte Bildauswerteverfahren automatisch erkannt werden. Bei einem Laserkoordinatenmessgerät 3 ist zudem die Lage der Beobachtungskamera 9 zur Zielplatte 6 bekannt oder es können Hilfsmarkierungen auf der Zielplatte 6 angebracht sein. Die Lage des Auftreffpunkts (A) im Bild auf der X-Y Ebene wird dann bezogen auf einen Bezugspunkt ermittelt. Mit Hilfe des Laserentfernungsmessgerätes 2 ist zudem der Abstand des Laserentfernungsmessgeräts 2 zur Zielplatte 6 in Z-Richtung bekannt. Auf diese Weise können auf einfache Weise mit einer einzigen Messung die Lage eines Punktes im dreidimensionalen Raum mit X-, Y- und Z-Koordinaten mit Hilfe einer Auswerteeinheit µP bestimmt werden, in der die Messdaten aus dem Laserentfernungsmessgerät 2 und dem Laserkoordinatenmessgerät 3 z. B. telemetrisch zusammengeführt und weiterverarbeitet werden.

Die Datenleitung zwischen dem Laserentfernungsmessgerät 2 und der Auswerteeinheit µP kann entfallen, wenn das Entfernungsmessergebnis nach einer Messung auf den Laserstrahl aufmoduliert wird. Mit dem Laserkoordinatenmessgerät 3 oder einem zusätzlichen optischen Aufnehmer wird das auf den Laserstrahl modulierte Modulationssignal detektiert und zur Demodulation an den Mikroprozessor µP weitergegeben. Der optische Aufnehmer kann beispielsweise eine zum Empfang von Streulicht des Laserstrahls angeordnete Fotodiode sein. Auf diese Weise wird bei großen Distanzen eine Verkabelung oder eine Datenfunkverbindung zwischen dem Laserentfernungsmessgerät 2 und dem Mikroprozessor µP eingespart.

Die teilweise reflektierende Zielfläche der Zielplatte 6 kann beispielsweise eine Aluminiumoxid aufweisende Oberfläche der Vorderseite haben, auf die der Laserstrahl 5 auftrifft. Aluminiumoxid hat sich als besonders geeignet erwiesen, da es die konträren Anforderungen des Laserentfernungsmessgeräts 2 und des Laserkoordinatenmessgerätes 3 an die gemeinsame Zielplatte 6 erfüllt. Zum einen benötigt die Empfangsoptik 8 einen möglichst großen reflektierten Anteil 7 des Laserstrahls 5. Auf der anderen Seite ist die Beobachtungskamera 9 darauf angewiesen, dass die Zielplatte 6 möglichst wenig reflektiert und den Großteil des Laserstrahls 5 an die Rückseite der Zielplatte 6 weiterleitet.

Eine andere in der Figur 2 dargestellte Ausführungsform des Laserkoordinatenmessgerätes 3 hat eine Zielplatte 6, bevorzugt eine mehrschichtige Zielplatte 6, bei der der Laserstrahl 5 von dem Auftreffpunkt A auf der Zielplatte 6 an die Kanten K der Zielplatte umgelenkt wird. Auf die Kanten K der Zielplatte 6 sind der Übersicht halber nicht dargestellte Lichtdetektoren ausgerichtet, die aus den maximalen Helligkeiten an den Kanten K die X- und Y-Koordinaten ermitteln. Als geeignete Lichtdetektoren können insbesondere Charged-Coupled-Device-Aufnehmer (CCD), CMOS-Aufnehmer oder Positionssensitive Dioden (PSD) eingesetzt werden. Auch andere geeignete Aufnehmer, wie Fotodioden etc., sind für den genannten Zweck verwendbar.

Die in der Figur 2 dargestellte Ausführungsform des Koordinatenmessgerätes 3 ist insbesondere für eine Anordnung der Lasermesseinrichtung 1 geeignet, bei der mindestens zwei Laserkoordinatenmessgeräte 3 auf einer Bezugsachse eines Objektes hintereinander angeordnet sind. Damit kann dann auch die relative Lage der Bezugsachse des Objektes bezüglich des Referenz-Laserstrahls 5 festgestellt werden.

## Patentansprüche

1. Lasermesseinrichtung (1) mit einem Laserentfernungsmessgerät (2), das eine Sendeoptik (4), eine Empfangsoptik (8) und eine Auswerteeinheit (µP) zur Ermittlung der Entfernung des Laserentfernungsmessgerätes (2) zu einer mindestens teilweise reflektierenden Zielfläche aus dem reflektierenden Anteil (7) eines durch die Sendeoptik (4) ausgestrahlten und durch die Empfangsoptik (8) aufgenommenen Laserstrahls (5) hat, **dadurch gekennzeichnet, dass** die teilweise reflektierende Zielfläche eine Zielplatte (6) eines Laserkoordinatenmessgerätes (3) ist, wobei das Laserkoordinatenmessgerät (3) mindestens einen optischen Bildaufnehmer zur Ermittlung der Lage eines Auftreffpunktes (A) des von dem Laserentfernungsmessgerät (2) ausgestrahlten Laserstrahls (5) auf der Zielplatte (6) hat.

2. Lasermesseinrichtung (1) nach Anspruch 1, **dadurch gekennzeichnet, dass** der optische Bildaufnehmer eine auf die Rückseite der Zielplatte (6) ausgerichtete Beobachtungskamera ist, wobei der Laserstrahl (5) auf der Vorderseite der Zielplatte (6) auftrifft.

3. Lasermesseinrichtung (1) nach Anspruch 1 oder 2, **dadurch gekennzeichnet, dass** die Zielplatte (6) eine Aluminiumoxid aufweisende Oberfläche der Vorderseite, auf die der Laserstrahl (5) auftrifft, hat.

4. Lasermesseinrichtung (1) nach Anspruch 1, **dadurch gekennzeichnet, dass** an Kanten (K) der Zielplatte (6) Lichtdetektoren zur Erfassung der Lage des von dem Auftreffpunkt (A) auf der Zielplatte (6) an die Kanten (K) der Zielplatte (6) umgelenkten Laserstrahls (5) vorgesehen sind.

5. Lasermesseinrichtung (1) nach Anspruch 4, **dadurch gekennzeichnet, dass** die Lichtdetektoren eine Reihe von entlang der jeweiligen Kante (K) nebeneinander angeordnete Charged-Coupled-Device-Aufnehmer (CCD) oder CMOS-Aufnehmer sind.

6. Lasermesseinrichtung (1) nach einem der Ansprüche 4 oder 5, **dadurch gekennzeichnet, dass** die Kanten (K) der Zielplatte (6), an denen die Lichtdetektoren angeordnet sind, angeschliffen sind.

7. Lasermesseinrichtung (1) nach einem der Ansprüche 4 bis 6, **dadurch gekennzeichnet, dass** die Zielplatte (6) mehrschichtig ist und mindestens eine Schichtfläche eine größere Streuung des Laserstrahls (5) bewirkt, als die übrigen Schichtflächen der Zielplatte (6).

8. Lasermesseinrichtung (1) nach Anspruch 7, **dadurch gekennzeichnet, dass** die eine größere Streuung bewirkende Schichtfläche aufgedampft oder aufgekittet ist.

9. Lasermesseinrichtung (1) nach einem der vorhergehenden Ansprüche, **dadurch gekennzeichnet, dass** die Zielplatte (6) mindestens eine Glas- und/oder Plexiglasschicht hat.

10. Lasermesseinrichtung (1) nach einem der vorhergehenden Ansprüche, **dadurch gekennzeichnet, dass** zwei im Abstand voneinander angeordnete Laserkoordinatenmessgeräte (3) vorgesehen sind, wobei die Zielplatte (6) des dem Laserentfernungsmessgerät (2) zugewandten Laserkoordinatenmessgerätes (3) für Licht mindestens teilweise durchlässig ist.

11. Laserkoordinatenmessgerät (3) mit einer Zielplatte (6) und mit optischen Bildaufnehmern zur Ermittlung der Lage des Auftreffpunktes (A) eines Laserstrahls (5) auf der Zielplatte (6), **dadurch gekennzeichnet, dass** die Bildaufnehmer als auf Kanten (K) der Zielplatte (6) ausgerichtete Lichtdetektoren zur Erfassung der Kanten-Austrittspunkte des von dem Auftreffpunkt (A) an die Kanten (K) umgelenkten Laserstrahlanteils (5) ausgebildet sind.

12. Laserkoordinatenmessgerät (3) nach Anspruch 11, **dadurch gekennzeichnet, dass** die Lichtdetektoren eine Reihe von entlang der jeweiligen Kanten (K) nebeneinander angeordnete Charged-Coupled-Device-Aufnehmer (CCD) oder CMOS-Aufnehmer sind.

13. Laserkoordinatenmessgerät (3) nach Anspruch 12 oder 13, **dadurch gekennzeichnet, dass** die Kanten (K) der Zielplatte (6), an denen die Lichtdetektoren angeordnet sind, Streueigenschaften aufweisen.

14. Laserkoordinatenmessgerät (3) nach einem der Ansprüche 11 bis 13, **dadurch gekennzeichnet, dass** die Zielplatte (6) mehrschichtig ist und mindestens eine Schichtfläche eine größere Streuung des Laserstrahls (5) bewirkt, als die übrigen Schichtflächen der Zielplatte (6) und mindestens eine Schichtfläche lichtleitende Eigenschaften zu den Seitenflächen hin aufweist.

15. Laserkoordinatenmessgerät (3) nach Anspruch 14, **dadurch gekennzeichnet, dass** die eine größere Streuung bewirkende Schichtfläche angeätzt oder durch Bedampfen aufgebracht ist.

16. Laserkoordinatenmessgerät (3) nach einem der Ansprüche 11 bis 15, **dadurch gekennzeichnet, dass** die Zielplatte (6) mindestens eine Glas- und/oder Plexiglasschicht hat.
